# EUROPEAN PATENT APPLICATION

(11) **EP 4 220 593 A1**
(43) Date of publication of application: **02.08.2023**
(21) Application number: 21871997.9
(22) Date of filing: 03.08.2021
(51) Int. Cl.: G07G 1/06, G06Q 30/06

(54) **RECEIPT SERVER, INFORMATION PROCESSING METHOD, AND PROGRAM STORAGE MEDIUM**

(30) Priority: 28.09.2020 JP 2020161658
(71) Applicant: Toshiba TEC Kabushiki Kaisha, Tokyo 141-8562 (JP)
(72) Inventor: NAMBU, Kazuya, Tokyo 141-8562 (JP); ARAI, Yasuhiro, Tokyo 141-8562 (JP); SAKURAI, Kenji, Tokyo 141-8562 (JP)
(74) Representative: Bandpay & Greuter
(86) International application number: PCT/JP2021/028763
(87) International publication number: WO 2022/064865

(57) **Abstract**

To allow services realized by altering a paper receipt to be provided for an electronic receipt as well. A receipt server according to an embodiment includes a storage unit, a generation unit, and an update unit. The storage unit stores management data for managing whether or not to display a display element. The generation unit generates, based on the management data stored in the storage unit, a receipt screen which indicates details of a transaction to be displayed on an information terminal device, by adding a display element to be displayed. The update unit updates the management data in response to an operation at the information terminal device on the receipt screen generated by the generation unit.

## Description

### FIELD

An embodiment of the present invention relates to a receipt server, an information processing method, and a program recording medium.

### BACKGROUND

In the case of a paper receipt using receipt paper, it is possible to stamp the receipt to indicate, for example, that the receipt has been issued. Also, in the case of a paper receipt, a discount coupon, etc. formed at the foot region can be cut out and collected.

In the case of an electronic receipt, however, since stamping and cutting cannot be performed, the services provided in a paper receipt cannot be provided.

Under the above-described circumstances, there has been a demand for services realized by altering a paper receipt to be provided for an electronic receipt as well.

### CITATION LIST

### PATENT LITERATURE

Patent Literature 1: Jpn. Pat. Appln. KOKAI Publication No. 2018-41504

### SUMMARY

An object to be solved by the present invention is to provide a receipt server, a receipt server, and a program recording medium capable of providing services realized by altering a paper receipt for an electronic receipt as well.

### BRIEF DESCRIPTION OF THE DRAWINGS

FIG. 1 is a block diagram showing a schematic configuration of an electronic receipt system according to an embodiment, and a main circuitry configuration of an information terminal device and a receipt server included in the electronic receipt system.
FIG. 2 is a diagram schematically showing a structure of a data record included in a receipt database shown in FIG. 1.
FIG. 3 is a flowchart of a client process.
FIG. 4 is a flowchart of the client process.
FIG. 5 is a flowchart of a server process.
FIG. 6 is a flowchart of the server process.
FIG. 7 is a diagram showing a receipt screen.
FIG. 8 is a diagram showing a select window.
FIG. 9 is a diagram showing a receipt screen on which a first stamp has been set.
FIG. 10 is a diagram showing a receipt screen on which a footer image has been deleted.

### DETAILED DESCRIPTION

A receipt server according to an embodiment includes a storage unit, a generation unit, and an update unit. The storage unit stores management data for managing whether or not to display a display element. The generation unit generates, based on the management data stored in the storage unit, a receipt screen which indicates details of a transaction to be displayed on an information terminal device, by adding a display element to be displayed. The update unit updates the management data in response to an operation at the information terminal device on the receipt screen generated by the generation unit.

Hereinafter, an example of an embodiment will be described with reference to the drawings.

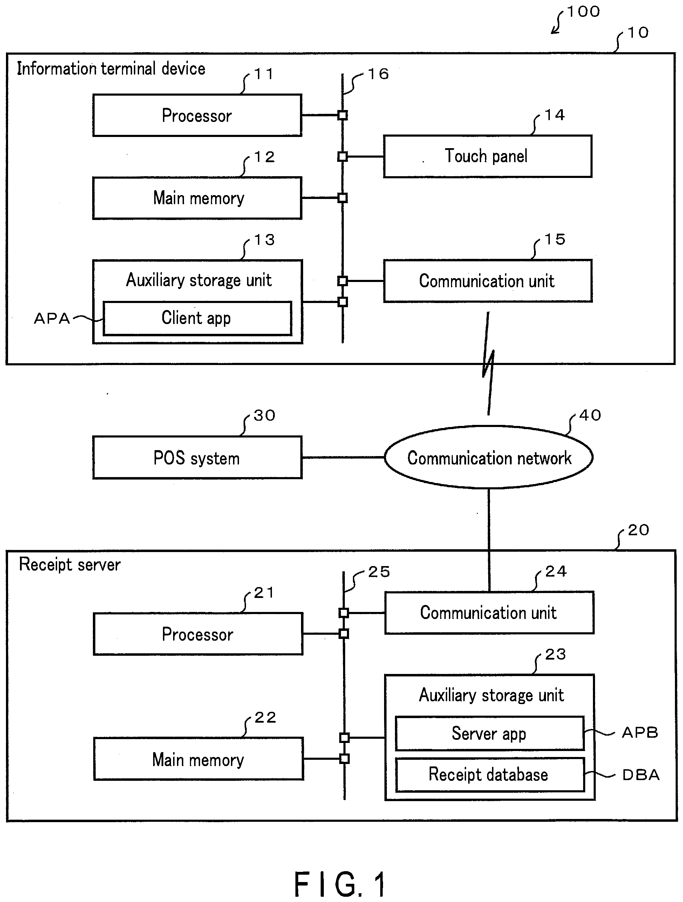

FIG. 1 is a block diagram showing a schematic configuration of an electronic receipt system 100 according to the present embodiment, and a main circuitry configuration of an information terminal device 10 and a receipt server 20 included in the electronic receipt system 100.

The electronic receipt system 100 is configured to enable communication between the information terminal device 10, the receipt server 20, and a point-of-sale (POS) system 30 via a communication network 40. For the communication network 40, the Internet, a virtual private network (VPN), a local area network (LAN), a public telecommunication network, a mobile communication network, and the like can be used either alone or in suitable combination. The electronic receipt system 100 typically includes a plurality of information terminal devices 10 and a plurality of POS systems 30; however, only one of each is shown in FIG. 1.

In accordance with an operation by a user of an electronic receipt service provided by the electronic receipt system 100, the information terminal device 10 displays, for example, a receipt screen for allowing the user to browse details of a transaction. When a plurality of information terminal devices 10 are included in the electronic receipt system 100, the plurality of information terminal devices 10 may be used by the same user, or may be individually used by different users. Alternatively, a single information terminal device 10 may be shared among a plurality of users.

The receipt server 20 acquires, from the POS system 30, receipt data containing information to be indicated in a receipt relating to a transaction managed by the POS system 30, and accumulates the acquired receipt data. The receipt server 20 generates screen data of a receipt screen, and instructs the information terminal device 10 to display the receipt screen together with a notification of the screen data.

The POS system 30 performs processing for registration, accounting, etc. of details of a transaction such as product sales in a retail store. When the customer who is to be a target of a transaction is the user of the electronic receipt service, the POS system 30 sends receipt data relating to the transaction to the receipt server 20.

The information terminal device 10 is typically a portable information processing device such as a smartphone, a mobile phone, or a tablet terminal. The information terminal device 10 may be a stationary information processing device, such as a desktop-type personal computer.

The information terminal device 10 includes a processor 11, a main memory 12, an auxiliary storage unit 13, a touch panel 14, a communication unit 15, a transmission path 16, etc. The processor 11, the main memory 12, the auxiliary storage unit 13, the touch panel 14, and the communication unit 15 are coupled via the transmission path 16.

In the information terminal device 10, a computer that performs information processing for controlling the information terminal device 10 is configured by connecting the processor 11, the main memory 12, and the auxiliary storage unit 13 via the transmission path 16.

The processor 11 corresponds to a central nerve of the computer. To realize various functions as the information terminal device 10, the processor 11 controls each component in accordance with information processing programs such as an operating system, middleware, and application programs. The processor 11 may be processing circuitry such as a central processing unit (CPU), a graphics processing unit (GPU), an application-specific integrated circuit (ASIC), a programmable logic device (e.g., simple programmable logic device (SPLD), a complex programmable logic device (CPLD), a field-programmable gate array (FPGA), etc.). The processor 11 is not necessarily configured as a single processing circuit, and a plurality of processing circuits may be combined to configure the processor 11. The same applies to the other processors according to the present embodiment.

The main memory 12 may be a volatile memory (a random access memory) or a non-volatile memory (a read-only memory or a non-volatile random access memory). The main memory 12 stores information processing programs and data necessary for information processing. The processor 11 reads and executes a program stored in the main memory 12 to realize a predetermined function. Instead of storing a program in the main memory 12, a program may be directly incorporated into the processor 11. In this case, the processor 11 reads and executes the program incorporated therein to realize a predetermined function. The predetermined function may be realized not only by the processor 11 executing a program, but also by a combination of logic circuits. The same applies to the other main memories according to the present embodiment.

The auxiliary storage unit 13 corresponds to an auxiliary storage portion of the computer. The auxiliary storage unit 13 is, for example, an electrically erasable programmable read-only memory (EEPROM). Well-known storage devices such as a hard disc drive (HDD) and a solid state drive (SSD) are provided. The auxiliary storage unit 13 stores data to be used by the processor 11 in performing various processes, and stores data generated by the processing at the processor 11. The auxiliary storage unit 13 stores the above-described information processing programs.

One of the information processing programs stored in the auxiliary storage unit 13 is an application program (hereinafter referred to as a "client app") APA for operation as a receipt client. Typically, however, the client app APA is downloaded via, for example, the Internet and written into the auxiliary storage unit 13 in response to an operation by a user of the information terminal device 10. That is, the transfer of the information terminal device 10 to the user is performed with the client app APA not stored in the auxiliary storage unit 13. However, the information terminal device 10 with the client app APA stored in the auxiliary storage unit 13 may be transferred to the user.

The touch panel 14 functions as an input device and a display device of the information terminal device 10.

The communication unit 15 is an interface for data communications performed via the communication network 40. As the communication unit 15, a well-known communication device for performing data communications via, for example, a mobile communication network or the Internet may be used.

The transmission path 16 includes an address bus, a data bus, a control signal line, etc., and transmits data and a control signal that are transmitted and received between the connected components. The transmission path 15 may be either a serial transmission path or a parallel transmission path.

The receipt server 20 includes a processor 21, a main memory 22, an auxiliary storage unit 23, a communication unit 24, a transmission path 25, etc. The processor 21, the main memory 22, the auxiliary storage unit 23, and the communication unit 24 are connected via a transmission path 25. The transmission path 25 includes an address bus, a data bus, a control signal line, etc., and transmits data and a control signal that are transmitted and received between the connected components.

In the receipt server 20, a computer that performs information processing for controlling the receipt server 20 is configured by connecting the processor 21, the main memory 22, and the auxiliary storage unit 23 via the transmission path 25.

The processor 21 corresponds to a central nerve of the computer. To realize various functions as the receipt server 20, the processor 21 controls each component in accordance with an information processing program.

The main memory 22 corresponds to a main storage portion of the computer.

The auxiliary storage unit 23 corresponds to an auxiliary storage portion of the computer. The auxiliary storage unit 23 is, for example, an EEPROM, an HDD, an SSD, etc. The auxiliary storage unit 23 stores data to be used by the processor 21 in performing various processes, and stores data generated by processing at the processor 21. The auxiliary storage unit 23 may store information processing programs. One of the information processing programs stored in the auxiliary storage unit 23 is an application program (hereinafter referred to as a "server app") APB for operation as a receipt server 20. A portion of the storage region of the auxiliary storage unit 23 is used as a region in which a receipt database DBA is stored. Details of the receipt database DBA will be discussed later.

The communication unit 24 is an interface for data communications performed via the communication network 40. As the communication unit 24, a well-known communication device for performing, for example, data communications via the Internet may be used.

The transmission path 25 includes an address bus, a data bus, a control signal line, etc., and transmits data and a control signal that are transmitted and received between the connected components.

The receipt server 20 may use, for example, a general-purpose computer device as basic hardware. At this time, typically, a computer device with the server app APB not stored in the auxiliary storage unit 23 and the server app APB are individually transferred to the operator of the receipt server 20. The transfer of the server app APB can be realized by recording on a removable recording medium such as a magnetic disk, a magnetooptical disk, an optical disk, and a semiconductor memory, or by downloading via a network. In this case, the server app APB is written into the auxiliary storage unit 23 in response to an operation by a manager of the receipt server 20 or an installation operator of the receipt server 20.

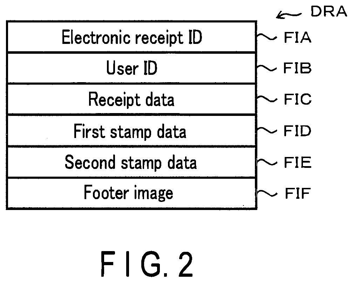

FIG. 2 is a diagram schematically showing a structure of a data record DRA included in a receipt database DBA.

The receipt database DBA is a set of data records DRA. A single data record DRA is associated with an electronic receipt relating to a single transaction. The data record DRA includes fields FIA, FIB, FIC, FID, FIE, and FIF. In the field FIA, an electronic receipt ID is set as an identifier of the associated electronic receipt. In the field FIB, a user ID is set as an identifier of a user of the associated electronic receipt. In the field FIC, receipt data, which is the main content of the associated electronic receipt, is set. The receipt data itself may be an independent data file, with a file path for the receipt data set in the field FIC. In the field FID, when the associated electronic receipt is set as being eligible for the first stamp, first stamp data is set. In the field FID, when the associated electronic receipt is not being eligible for the first stamp, the field FID is made blank, or preset invalid data is set. In the field FIE, when the associated electronic receipt is set as being eligible for the second stamp, second stamp data is set. In the field FIE, when the associated electronic receipt is not being eligible for the second stamp, the field FIE is made blank, or preset valid data is set. In the field FIF, when a footer is appended to the associated electronic receipt, data indicating an image of the footer (hereinafter referred to as a "footer image") is set. The footer image may be an independent data file, with a file path of the data file of the footer image set in the field FIF. When a footer is not appended to the associated electronic receipt, the field FIF is made blank, or preset invalid data is set.

Next, an operation of the above-described electronic receipt system 100 will be described. Details of various processes to be described below are merely examples, and changes to the order of some of the processes, omissions of some of the processes, addition of other processes, etc. may be suitably performed.

The POS system 30 performs registration, accounting, etc. of details of a transaction such as product sales in a retail store in a well-known manner. In a transaction in which the customer is the user of the electronic receipt service, the POS system 30 sends receipt data including information to be indicated on the receipt regarding the transaction to the receipt server 20, together with a notification of a user ID affixed to the user. The information to be indicated on the receipt is, for example, the name of the retail store where the transaction has been performed, the year, month, date, and time of the transaction, the product name and the unit price of the product which is the target of the transaction, the subtotal, the cash amount, the change, etc.

Upon receiving receipt data from the POS system 30 at the receipt server 20, the processor 21 generates a new data record DRA in which the received receipt data is set in the field FIC, and adds the new data record DRA to the receipt database DBA. In the field FIA of the generated data record DRA, the processor 21 sets an electronic receipt ID determined in accordance with preset rules. In the field FIC of the generated data record DRA, the processor 21 sets a user ID to which a notification has been made together with the receipt data. If an electronic receipt with which the generated data record DRA is associated is to be eligible for the first stamp, the processor 21 sets, in the field FID, first stamp data including the stamp name of the first stamp and management data indicating that the first stamp data has not been set. If an electronic receipt with which the generated data record DRA is associated is to be eligible for the second stamp, the processor 21 sets, in the field FIE, second stamp data including the stamp name of the second stamp and management data indicating that the second stamp data has not been set. If a footer is to be appended to the electronic receipt with which the generated data record DRA is associated, the processor 21 sets a footer image to the field FIF. In the present embodiment, when an electronic receipt is eligible for a single stamp, it is set as being eligible for the first stamp. It is assumed that the footer image is an image proving possession of a right that may be lost under certain conditions. The footer image is, for example, an image indicating a discount coupon, a voucher, or the like.

Thus, the management data included in the first stamp data and the second stamp data indicates whether or not the first stamp and the second stamp are to be displayed as display elements, and indicates that they are not displayed in an initial state. Accordingly, the auxiliary storage unit 23 is an example of a storage unit that stores such management data.

The data on the footer image is stored in the auxiliary storage unit 23 if it should be indicated on the receipt screen, and is not stored if it should not be indicated. That is, such data also functions as management data indicating whether or not a footer image as a display element should be displayed. Accordingly, the auxiliary storage unit 23 is an example of a storage unit that stores such management data.

Whether or not an electronic receipt is to be eligible for the first stamp or the second stamp, and whether or not a footer is to be appended may be determined in accordance with preset rules by the processor 21, or may be designated by the POS system 30.

When the information terminal device 10 needs to be activated as a client of an electronic receipt service, the processor 11 executes a client app APA to start information processing (hereinafter referred to as a "client process").

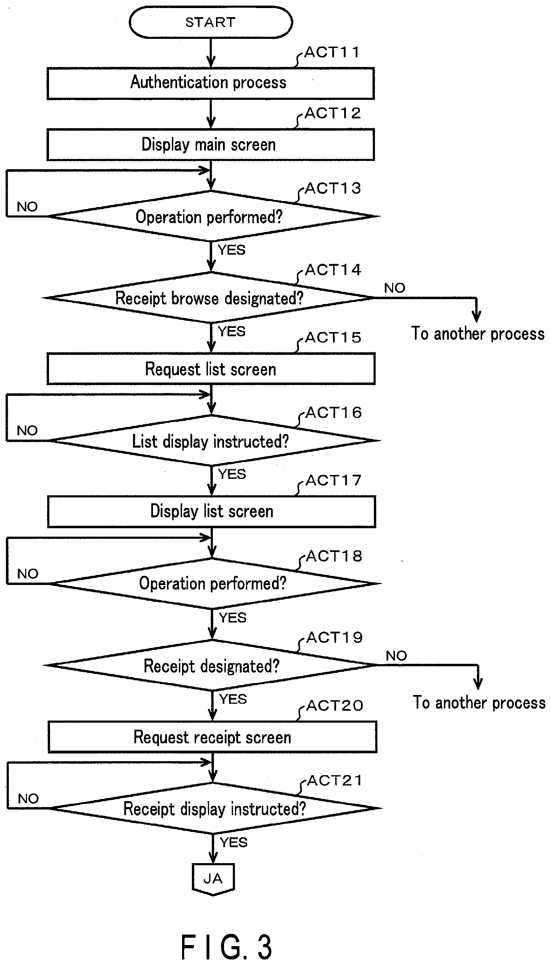

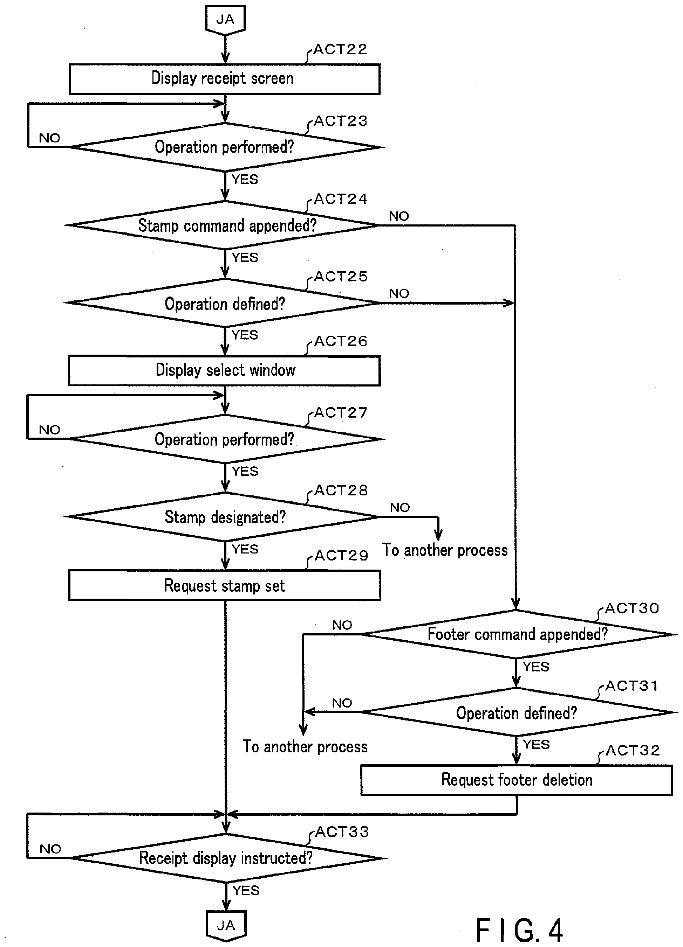

FIGS. 3 and 4 show flowcharts of a client process by the processor 11.

The processor 11 performs an authentication process at ACT11 in FIG. 3. The authentication process is a process for authenticating an operator of the information terminal device 10 as a user of the electronic receipt service. When the authentication succeeds, the processor 11 advances to ACT12.

The processor 11 displays a main screen at ACT12. The main screen is an operation screen for allowing the user to select functions to use from a variety of functions realized by a client process. The processor 11 instructs the touch panel 14 to display, for example, a preset screen as a main screen.

At ACT13, the processor 11 waits until some kind of operation is performed. If an operation, etc. at the touch panel 14 has been performed, the processor 11 determines "YES", and advances to ACT14.

At ACT14, the processor 11 confirms whether or not the above operation has been performed to designate a receipt browse function. If an operation other than the above operation has been performed, the processor 11 determines "NO", and shifts to a process corresponding to the performed operation. Since the process in such a case is not a characteristic of the present embodiment, a description thereof will be omitted. On the other hand, when a receipt browse function has been designated by, for example, a preset operation on the touch panel 14, the processor 11 determines "YES", and advances to ACT15.

At ACT15, the processor 11 requests the receipt server 20 for a list screen. The processor 11 sends, for example, request data containing identification data for identifying that the request has been made for a list screen, and a user ID acquired at, for example, ACT11 from the communication unit 15 to the communication network 40, to be addressed to the receipt server 20. Various requests to be described below are realized by transmitting and receiving, via the communication network 40, request data containing identification data for identifying the purpose of the request, as described above.

When the request data is transmitted to the receipt server 20 via the communication network 40 and is received by a communication unit 24, the processor 21 executes a server app APB to start information processing (hereinafter referred to as a "server process"). Upon receiving a request for a list screen from another information terminal device 10 during execution of a server process, the processor 21 starts a new server process in a thread other than a thread of the server process being executed. That is, the processor 21 may execute a plurality of server processes in parallel.

In the description of the server process given below, when reference is simply made to "information terminal device 10" and "user", it is assumed that they refer to the information terminal device 10 which has made a request that has triggered the start of the server processing in the description, and an operator thereof, respectively.

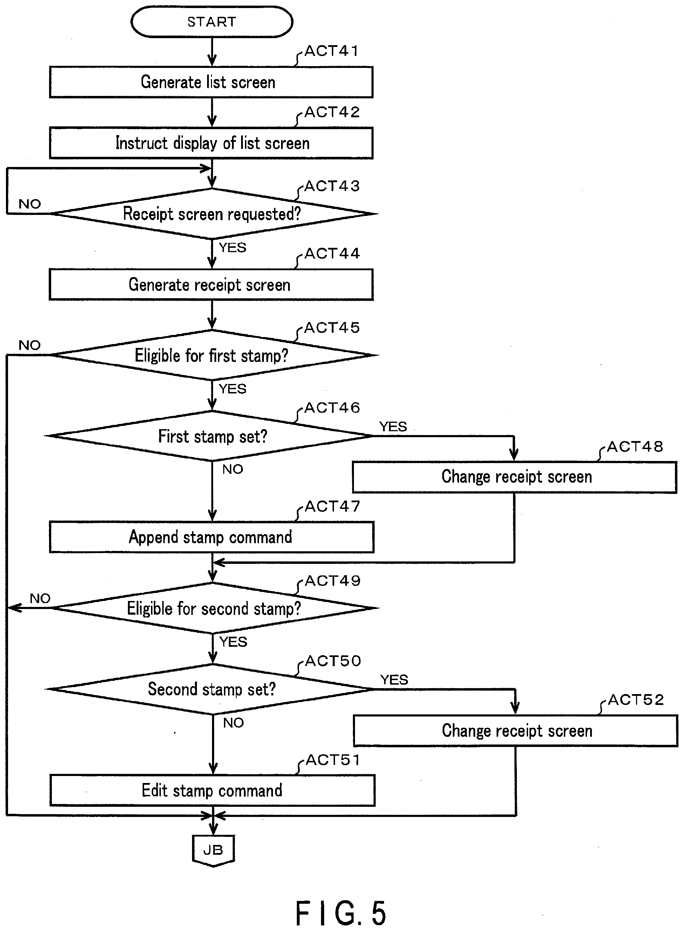

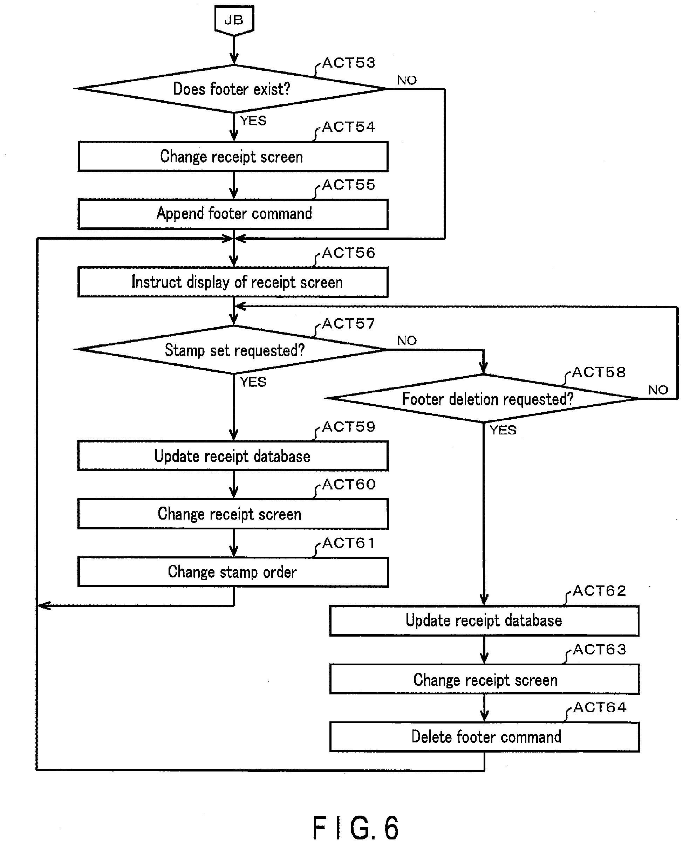

FIGS. 5 and 6 are flowcharts of a server process by the processor 21.

At ACT41 in FIG. 5, the processor 21 generates a list screen. The list screen is a screen indicating a list of electronic receipts that are managed for a user. The processor 21 extracts, for example, all the data records DRA in which the user ID contained in the request data requesting a list screen is set in the field FIB from the receipt database DBA. The processor 21 acquires the times and dates of transactions and retail store names from the receipt data set in the field FIC of the extracted data records DRA, determines a list screen as a screen indicating a list of them, and generates screen data indicating the list screen. The processor 21 indicates an electronic receipt ID of each of the electronic receipts shown on the list screen, and appends, to the screen data, a command to notify an electronic receipt ID relating to the specified electronic receipt designated in relation to a request for a receipt screen in response to designation of an electronic receipt on a list screen.

At ACT42, the processor 21 instructs the information terminal device 10 to display a list screen. The processor 21 sends, for example, instruction data containing identification data for identifying an instruction for a display screen and screen data indicating a list screen from the communication unit 24 to the communication network 40, addressed to the information terminal device 10. Various instructions to be described below are realized by transmitting and receiving, via the communication network 40, request data containing identification data for identifying the purpose of the instruction, similarly to the above.

The processor 11 causes the information terminal device 10 to request a list screen at ACT15 in FIG. 3, and then advances to ACT16.

At ACT16, the processor 11 waits until an instruction to display a list screen is made. When, for example, the instruction data sent from the receipt server 20 is transmitted by the communication network 40 to the information terminal device 10 and received by the communication unit 15, the processor 11 determines "YES", and advances to ACT17.

At ACT17, the processor 11 displays a list screen. The processor 11 causes, for example, the touch panel 14 to display a list screen indicated by screen data contained in the instruction data. The user designates an electronic receipt that the user wants to display from the list screen displayed on the touch panel 14 through a preset operation of, for example, tapping a region in which the time and date of the transaction and the retail store name relating to the electronic receipt are shown.

At ACT18, the processor 11 waits until some kind of operation is performed. If an operation, etc. at the touch panel 14 has been performed, the processor 11 determines "YES", and advances to ACT19.

At ACT19, the processor 11 confirms whether or not the above operation has been performed to designate an electronic receipt. If an operation different from the above operation has been performed, the processor 11 determines "NO", and shifts to a process corresponding to the performed operation. Since the process in such a case is not a characteristic of the present embodiment, a description thereof will be omitted. On the other hand, if an operation for designating an electronic receipt has been performed, the processor 11 determines "YES", and advances to ACT20.

At ACT20, the processor 11 requests the receipt server 20 for a receipt screen. The processor 11 causes the request data to include an electronic receipt ID of the designated electronic receipt (hereinafter referred to as "designated receipt").

The processor 21 causes the receipt server 20 to instruct a list screen to be displayed at ACT42 in FIG. 5, and then advances to ACT43.

At ACT43, the processor 21 waits until a request for a receipt screen is made. If a receipt screen has been requested by the information terminal device 10, the processor 21 determines "YES", and advances to ACT44.

At ACT44, the processor 21 generates a receipt screen. The receipt screen is a screen for allowing the user to visually recognize the designated receipt. The processor 21 extracts, for example, a data record DRA in which the electronic receipt ID contained in the request data requesting a receipt screen is set in the field FIA from the receipt database DBA. The processor 21 determines, for example, a receipt screen as a screen indicating details of a transaction based on the receipt data set in the field FIC of the extracted data record DRA, and generates screen data indicating the receipt screen.

At ACT45, the processor 21 confirms whether or not the designated receipt is eligible for the first stamp. If, for example, the first stamp data is set in the field FID of the data record DRA extracted at ACT44, the processor 21 determines "YES", and advances to ACT46.

At ACT46, the processor 21 confirms whether or not the first stamp has been set. If, for example, the management data contained in the first stamp data set in the field FID of the data record DRA extracted at ACT44 indicates that the first stamp data has not been set, the processor 21 determines "NO", and advances to ACT47. It is assumed, as described above, that the management data of the first stamp data is in a state indicating that the first stamp data has not been set in the initial state.

At ACT47, the processor 21 appends a stamp command to the screen data generated at ACT44. The stamp command defines a process of accepting an operation at the information terminal device 10 to affix a first stamp onto a receipt screen. The stamp command is described by, for example, JavaScript (registered trademark).

If the management data of the first stamp data indicates that the first stamp data has been set, the processor 21 determines "YES" at ACT46 and advances to ACT48, which will be described later.

At ACT49, the processor 21 confirms whether or not the designated receipt is eligible for the second stamp. If, for example, the second stamp data is set in the field FIE of the data record DRA extracted at ACT44, the processor 21 determines "YES", and advances to ACT50.

At ACT50, the processor 21 confirms whether or not the second stamp has been set. If, for example, the management data contained in the second stamp data set in the field FIE of the data record DRA extracted at ACT44 indicates that the second stamp data has not been set, the processor 21 determines "NO", and advances to ACT51. It is assumed, as described above, that the management data of the second stamp data is in a state indicating that the second stamp data has not been set in the initial state.

At ACT51, the processor 21 edits the stamp command appended to the screen data at ACT47. The processor 21 rewrites the stamp command in such a manner that a process of accepting an operation at the information terminal device 10 to affix a first stamp or a second stamp onto the receipt screen is defined.

If the management data of the second stamp data indicates that the second stamp data has been set, the processor 21 determines "YES" at ACT50 and advances to ACT52, which will be described later.

After completing ACT51, the processor 21 advances to ACT53 in FIG. 6. If the first stamp data has not been set in the field FID of the data record DRA extracted at ACT44, the processor 21 determines that the designated receipt is not eligible for the first stamp and determines "NO" at ACT45, passes ACT46 to ACT52, and advances to ACT53 in FIG. 6. If the second stamp data is not set in the field FIE of the data record DRA extracted at ACT44, the processor 21 determines that the designated receipt is not eligible for the second stamp and determines "NO" at ACT49, passes ACT50 to ACT52, and advances to ACT53 in FIG. 6.

At ACT53, the processor 21 confirms whether or not there is a footer to be appended to the designated receipt. If, for example, data on a footer image is set in the field FIF of the data record DRA extracted at ACT44, the processor 21 determines "YES", and advances to ACT54.

At ACT54, the processor 21 changes the receipt screen to include a footer image. The processor 21 changes, for example, the screen data of the receipt screen to add a footer image indicated by the data set in the field FIF of the data record DRA extracted at ACT44 to the foot of the receipt screen at the point in time when the processing is advanced to ACT54.

At ACT55, the processor 21 appends a footer command to the screen data changed at ACT54. The footer command defines a process of accepting an operation at the information terminal device 10 to erase the footer image from the receipt screen. The footer command is described by, for example, JavaScript (registered trademark).

After completing ACT55, the processor 21 advances to ACT56. If data on a footer image is not set in the field FIF of the data record DRA extracted at ACT44, the processor 21 determines that there is no footer to be appended to the designated receipt and determines "NO" at ACT53, passes ACT54 and ACT55, and advances to ACT56.

At ACT56, the processor 21 instructs the information terminal device 10 to display a receipt screen. The processor 21 causes the instruction data to contain screen data of the receipt screen at the point in time when the processing advances to ACT56.

The processor 11 causes the information terminal device 10 to request a receipt screen at ACT20 in FIG. 3, and then advances to ACT21.

At ACT21, the processor 11 waits until an instruction to display a receipt screen is made. If an instruction to display a receipt screen is made by the receipt server 20, the processor 11 determines "YES", and advances to ACT22 in FIG. 4.

At ACT22, the processor 11 displays a receipt screen. The processor 11 causes, for example, the touch panel 14 to display a receipt screen indicated by screen data contained in instruction data.

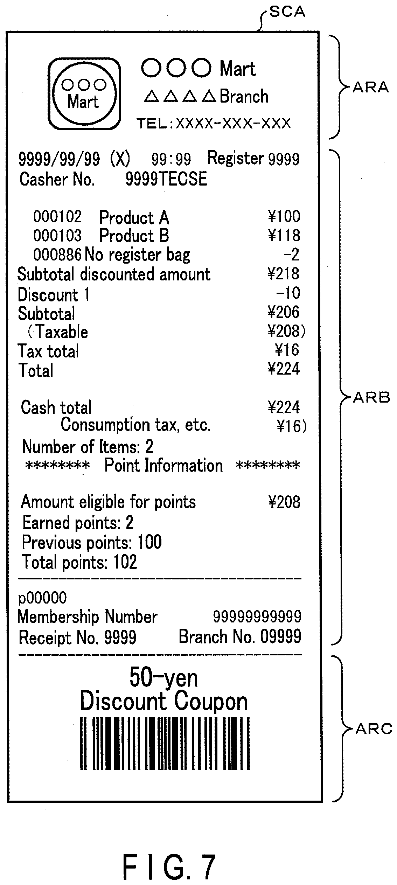

FIG. 7 is a diagram showing a receipt screen SCA as an example.

The receipt screen SCA includes regions ARA, ARB, and ARC. The region ARA is a region indicating a logotype of a retail store. The region ARB is a region indicating information contained in receipt data. The region ARC is a region indicating a footer image. FIG. 7 is an example in which a footer image indicating a discount coupon is appended.

At ACT23 in FIG. 4, the processor 11 waits until some kind of operation is performed. If an operation, etc. on the touch panel 14 has been performed, the processor 11 determines "YES", and advances to ACT24.

At ACT24, the processor 11 confirms whether or not a stamp command is appended to screen data of the receipt screen. If a stamp command is appended, the processor 11 determines "YES", and advances to ACT25.

At ACT25, the processor 11 confirms whether or not the above operation is an operation defined by the stamp command. Herein, it is assumed that an operation of continuing pressing the region ARA over a preset period of time (hereinafter referred to as "holding down") is defined by the stamp command.

To set a stamp in the electronic receipt being displayed, the user holds down the logotype.

When such a holding-down is input by the touch panel 14, the processor 11 determines "YES" at ACT25, assuming that a defined operation has been performed, and advances to ACT26.

At ACT26, the processor 11 displays a select window to be superimposed on a receipt screen being displayed. The select window is a window for allowing a user to select a stamp to be set.

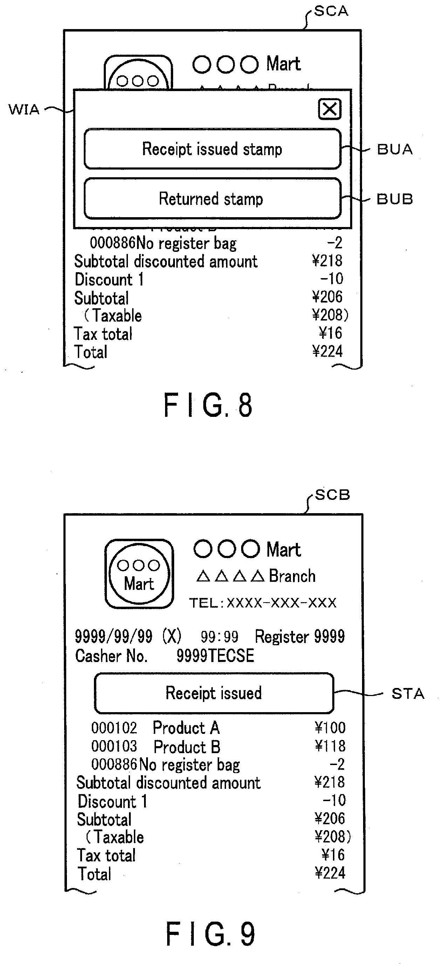

FIG. 8 is a diagram showing a select window WIA as an example.

FIG. 8 is an example of the case where the region ARA of the receipt screen SCA shown in FIG. 7 has been held down. FIG. 8 is an example of a state in which the designated receipt is eligible for the first and second stamps, and neither the first stamp nor the second stamp is set. Accordingly, the processor 11 causes the select window WIA to be a window indicating a button BUA for designating a first stamp and a button BUB for designating a second stamp. If the designated receipt is eligible for the first and second stamps, and only the first stamp is not set, the processor 11 causes the select window to be a window that indicates the button BUA but does not indicate the button BUB. If the designated receipt is eligible for the first and second stamps and only the second stamp is not set, the processor 11 causes the select window to be a window that indicates the button BUB but does not indicate the button BUA. If the designated receipt is eligible only for the first stamp, the processor 11 causes the select window to be a window that indicates the button BUA but does not indicate the button BUB.

The user designates a stamp to be set through a preset operation of, for example, touching the button BUA or the button BUB.

At ACT27 in FIG. 4, the processor 11 waits until some kind of operation is performed. If an operation, etc. at the touch panel 14 has been performed, the processor 11 determines "YES", and advances to ACT24.

At ACT24, the processor 11 confirms whether or not the above operation is an operation for designating a stamp. If an operation other than the above operation has been made, the processor 11 determines "NO", and shifts to a process corresponding to the performed operation. Since the process in such a case is not a characteristic of the present embodiment, a description thereof will be omitted. On the other hand, if an operation of designating a stamp to be set has been performed as described above, the processor 11 determines "YES", and advances to ACT29.

At ACT29, the processor 11 requests the receipt server 20 for a set of stamps. The processor 11 causes the request data to include data indicating which of the first stamp and the second stamp has been designated.

The processor 11 executes ACT25 to ACT29 in accordance with a stamp command appended to screen data of the receipt screen.

The processor 21 instructs the receipt server 20 to display a receipt screen at ACT56 in FIG. 6, and then advances to ACT57.

At ACT57, the processor 21 confirms whether or not a set of stamps has been requested. If such a request cannot be confirmed, the processor 21 determines "NO", and advances to ACT58.

At ACT58, the processor 21 confirms whether or not deletion of a footer has been requested. If the request cannot be confirmed, the processor 21 determines "NO", and returns to ACT57.

In this manner, at ACT57 and ACT58, the processor 21 waits until a request for deleting a set of stamps or a footer is made. If a set of stamps has been requested as described above, the processor 21 determines "YES" at ACT57, and advances to ACT59.

At ACT59, the processor 21 updates the receipt database DBA to set a stamp in response to the request. If, for example, a set of first stamps has been requested, the processor 21 rewrites management data contained in the first stamp data set in the field FID of the data record DRA extracted at ACT44 in a state indicating that the first stamp data has been set. If, for example, a set of second stamps has been requested, the processor 21 rewrites management data contained in the second stamp data set in the field FIE of the data record DRA extracted at ACT44 in a state indicating that the second stamp data has been set. In this manner, the processor 21 executes the server app APB and executes information processing, thereby causing a computer including the processor 21 as a central nerve to function as an update unit.

At ACT60, the processor 21 changes the receipt screen based on the updated data record DRA. If, for example, the management data of the first stamp data is in a state indicating that the first stamp data has been set, the processor 21 changes the receipt screen to indicate addition of the first stamp.

At ACT61, the processor 21 changes the stamp command appended to the screen data in response to the stamp having been changed to a set state. That is, when, for example, both the first and second stamps are eligible and a stamp command which defines that either one of them is to be designated is appended to the screen data, the processor 21 changes the stamp command to define that only a stamp other than the stamp that has been set this time is to be designated. If, for example, a stamp command that defines that either one of the first and second stamps is to be designated has been appended to the screen data, the processor 21 deletes the stamp command.

Thereafter, the processor 21 repeats processing of ACT56 and thereafter in the same manner as that described above. Thereby, the processor 21 instructs the information terminal device 10 to again display a receipt screen together with a notification of the screen data of which the receipt screen and the stamp command have been changed.

After causing the information terminal device 10 to request a set of stamps at ACT29 in FIG. 4, the processor 11 advances to ACT33. When display of the receipt screen is instructed again, the processor 11 determines "YES", and repeats the processing of ACT22 and thereafter in the same manner as that described above. Thereby, the processor 11 allows the touch panel 14 to display a receipt screen in which the above change has been made.

FIG. 9 is a diagram showing a part of a receipt screen SCB as an example of a state in which the first stamp has been set.

The receipt screen SCB is an example of the case where an operation of instructing a set of first stamps has been made during display of the receipt screen SCA shown in FIG. 7. In the receipt screen SCB, a stamp STA is added to the receipt screen SCA.

If, for example, a stamp command is not appended to the screen data of the receipt screen, the processor 11 determines "NO" at ACT24 in FIG. 4, and advances to ACT30. If the operation performed during the display of the receipt screen is not the operation defined by the stamp command, the processor 11 determines "NO" at ACT25 in FIG. 4, and advances to ACT30.

At ACT30, the processor 11 confirms whether or not a footer command has been appended to the screen data of the receipt screen. If a footer command has been appended, the processor 11 determines "YES", and advances to ACT31.

At ACT31, the processor 11 confirms whether or not the above-described operation is an operation defined by the footer command. Herein, it is assumed that a holding-down in the region ARC is defined by the footer command.

By presenting a receipt screen SCA displayed on the touch panel 14 to a clerk, the user can use a discount coupon indicated in the region ARC. If the conditions for use of the discount coupon indicated in the region ARC are satisfied, a clerk gives a discount based on the discount coupon by a preset operation of, for example, reading a barcode on the discount coupon. Also, the clerk instructs the user to delete the discount coupon. In response to the instruction by the clerk, the user holds down the region ARC.

When such a holding-down is input by the touch panel 14, the processor 11 determines "YES" at ACT31, assuming that a defined operation has been performed, and advances to ACT32. The processor 11 may cause the user to designate whether or not to execute deletion, and may advance to ACT32 if execution has been designated. In this case, if, for example, non-execution of deletion has been designated, the processor 11 returns to a standby state at ACT23.

At ACT32, the processor 11 requests the receipt server 20 to delete the footer.

If a footer command is not appended, the processor 11 determines "NO" at ACT30, and determines "NO" at ACT31 if the performed operation is not an operation defined by the footer command, and shifts to, in either case, a process corresponding to the performed operation. Since the process in such a case is not a characteristic of the present embodiment, a description thereof will be omitted.

The processor 11 executes ACT30 to ACT32 in accordance with, for example, a footer command appended to screen data of the receipt screen.

If deletion of a footer has been requested at the receipt server 20 as described above, the processor 21 determines "YES" at ACT58 in FIG. 6, and advances to ACT62.

At ACT62, the processor 21 updates the receipt database DBA to delete the footer in response to the request. The processor 21 deletes, for example, data on the footer image set in the field FIF of the data record DRA extracted at ACT44. Management data indicating whether or not to display a footer image may be set in the field FIF or another field together with data on the footer image, and the footer image may not be displayed by changing the management data. In this manner, the processor 21 executes the server app APB and executes information processing, thereby causing a computer including the processor 21 as a central nerve to function as an update unit.

At ACT63, the processor 21 changes the receipt screen based on the updated data record DRA. The processor 21 deletes a footer image contained in the receipt screen.

At ACT64, the processor 21 deletes a footer command appended to the screen data.

Thereafter, the processor 21 repeats processing of ACT56 and thereafter in the same manner as that described above. Thereby, the processor 21 instructs the information terminal device 10 to again display a receipt screen in accordance with a notification of screen data of a receipt screen from which a footer image has been deleted.

After causing the information terminal device 10 to request deletion of a footer at ACT32 in FIG. 4, the processor 11 advances to ACT33. When display of the receipt screen is instructed again, the processor 11 determines "YES", and repeats the processing of ACT22 and thereafter in the same manner as that described above. Thereby, the processor 11 causes the touch panel 14 to display a receipt screen in which the above change has been made.

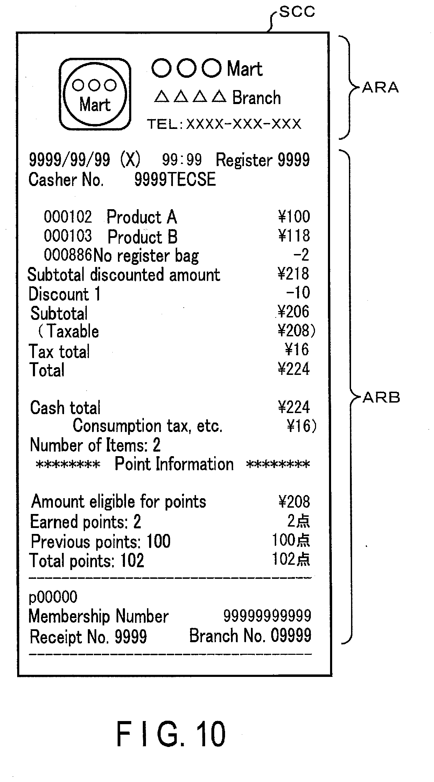

FIG. 10 is a diagram showing a receipt screen SCC as an example of a state in which a footer image has been deleted.

The receipt screen SCC is an example in the case where an operation of instructing deletion of a footer has been performed during display of the receipt screen SCA shown in FIG. 7. In this receipt screen SCC, a region ARC included in the receipt screen SCA does not exist.

Regarding the receipt screen designated from the list screen, if the first stamp has previously been set, as described above, the processor 21 determines "YES" at ACT46 in FIG. 5, and advances to ACT48.

At ACT48, the processor 21 changes the receipt screen to indicate the first stamp. That is, the processor 21 generates a receipt screen not indicating a first stamp at ACT44, even if the first stamp has been set. At ACT48, the processor 21 changes the receipt screen to indicate the first stamp. Thereafter, the processor 21 advances to ACT49.

Regarding the receipt screen designated from the list screen, if the second stamp has previously been set, as described above, the processor 21 determines "YES" at ACT50 in FIG. 5, and advances to ACT52.

At ACT52, the processor 21 changes the receipt screen to indicate the second stamp. That is, the processor 21 generates a receipt screen that does not indicate a second stamp at ACT44 even if the second stamp has been set. At ACT50, the processor 21 changes the receipt screen to indicate the second stamp. Thereafter, the processor 21 advances to ACT53 in FIG. 6.

Prior to execution of ACT44, the processor 21 may confirm the setting statuses of the first stamp and the second stamp, and generate a receipt screen reflecting such setting situations at ACT44.

Regarding the receipt screen designated from the list screen, if an originally appended footer image has been deleted as described above, the processor 21 determines "NO" at ACT53 in FIG. 6, and passes ACT54 and ACT55. Accordingly, in such a case, a footer image is not indicated on a receipt screen instructing display at ACT56.

Thus, the processor 21 generates a receipt screen indicating a display element that is to be displayed by data having a function as management data set in the receipt database DBA. In this manner, the processor 21 executes the server app APB and executes information processing, thereby causing a computer including the processor 21 as a central nerve to function as a generation unit.

As described above, for a receipt screen that is eligible for a stamp, the receipt server 20 sets the stamp in response to an operation in the information terminal device 10, and causes the receipt screen to indicate the set stamp thereafter. With the receipt server 20, it is thereby possible to provide a service that has been realized by putting a stamp on a paper receipt in an electronic receipt as well.

Also, the receipt server 20 deletes a footer image appended to the receipt screen in response to an operation in the information terminal device 10, and does not indicate the footer image on the receipt screen thereafter. With the receipt server 20, it is thereby possible to provide a service that has been realized by cutting and collecting part of a paper receipt on an electronic receipt as well.

The embodiment can be variously modified as will be described below.

Only either one of addition of a stamp and deletion of a footer image may be performed.

The number of stamps that can be added may be only one, or three or more.

The position indicating the stamp on the receipt screen and the shape of the stamp can be suitably changed.

A process for changing the receipt screen being displayed in the information terminal device 10 in response to an instruction for a set of stamps may be performed by the processor 11 at the information terminal device 10.

An image to be a target of deletion is not necessarily a footer image appended to the foot of the receipt screen, and may be an image indicated at the head or the middle.

A process for changing the receipt screen being displayed in the information terminal device 10 in response to an instruction for deletion of an image may be performed by the processor 11 at the information terminal device 10.

An operation region for giving an instruction for a set of stamps may be a given preset region other than the region ARA. Such an operation may be a preset given operation other than a holding-down.

An operation region for instructing deletion of an image may be a preset given region other than the region ARC. Such an operation may be a preset given operation other than a holding-down.

The functions realized by the processors 11 and 21 by information processing may be partly or entirely realized by hardware that executes information processing that is not based on a program, such as logic circuitry. The above-described functions may be realized by combining hardware such as logic circuitry with software control.

The programs according to the present embodiment may be transferred either in a state of being stored in an electronic device or in a state of not being stored in an electronic device. In the latter case, the programs may be transferred via a network, or may be transferred in a state of being recorded in a recording medium. The recording medium is a non-transitory tangible medium. The recording medium is a computer readable medium. The recording medium may be any form of medium that can store a program and that can be read by a computer, such as a CD-ROM and a memory card.

While certain embodiments have been described, these embodiments are shown merely as examples, and are not intended to limit the scope of the invention. These novel embodiments may be implemented in a variety of other forms with various omissions, substitutions, and changes without departing from the gist of the invention. The embodiments and their modifications are covered by the accompanying claims and their equivalents, as would fall within the scope and the gist of the disclosure.

## Claims

1. A receipt server comprising:
a storage unit which stores management data for managing whether or not a display element is to be displayed;
a generation unit which generates, based on the management data stored in the storage unit, a receipt screen indicating details of a transaction to be displayed on an information terminal device, by adding a display element to be displayed; and
an update unit which updates the management data in response to an operation at the information terminal device on the receipt screen generated by the generation unit.

2. The receipt server according to claim 1, wherein, in response to an operation at the information terminal device, the update unit updates the management data which indicates that the display element is not to be displayed in an initial state to indicate that the display element is to be displayed.

3. The receipt server according to claim 2, wherein, when the management data indicates that the display element is to be displayed, the generation unit indicates, on the receipt screen, a stamp showing that a preset process has been done.

4. The receipt server according to claim 1, wherein, in response to an operation at the information terminal device, the update unit updates the management data which indicates that the display element is to be displayed in an initial state to indicate that the display element is not to be displayed.

5. The receipt server according to claim 4, wherein when the management data indicates that the display element is to be displayed, the generation unit indicates, on the receipt screen, an image proving possession of a right that may be lost under preset conditions.

6. An information processing method comprising:
generating, based on management data for managing whether or not to display a display element, a receipt screen which indicates details of a transaction to be displayed on an information terminal device, by adding a display element to be displayed; and
updating the management data in response to an operation at the information terminal device on the generated receipt screen.

7. A program recording medium which records thereon a program for causing a computer provided in a receipt server that stores management data for managing whether or not to display a display element to perform:
generating, based on the management data, a receipt screen indicating details of a transaction to be displayed on the information terminal device by adding a display element to be displayed; and
updating the management data in response to an operation at the information terminal device on the generated receipt screen.
